(19) Europäisches Patentamt / European Patent Office / Office européen des brevets

(11) **EP 3 124 950 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **16179839.2**

(22) Anmeldetag: **18.07.2016**

(51) Internationale Patentklassifikation (IPC):
***G01N 9/00*** *(2006.01)*

(52) Gemeinsame Patentklassifikation (CPC):
**G01N 9/002;** G01N 2009/006

(54) **VERFAHREN ZUR BESTIMMUNG DER DICHTE VON FLÜSSIGKEITEN**

METHOD FOR DETERMINING THE DENSITY OF LIQUIDS

PROCÉDÉ DE DÉTERMINATION DE L'ÉPAISSEUR DE LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 AT 506802015**

(43) Veröffentlichungstag der Anmeldung:
**01.02.2017 Patentblatt 2017/05**

(73) Patentinhaber: **Anton Paar GmbH
8054 Graz-Straßgang (AT)**

(72) Erfinder:
• **Breidler, Robert
8020 Graz (AT)**
• **Steiner, Gerald
8053 Graz (AT)**
• **Grüllenberger, Rupert
8020 Graz (AT)**

(74) Vertreter: **Wildhack & Jellinek
Patentanwälte OG
Landstraßer Hauptstraße 50
1030 Wien (AT)**

(56) Entgegenhaltungen:
EP-A1- 1 464 923  EP-A1- 3 124 950
JP-A- 2011 027 653  US-A1- 2008 053 240

**Beschreibung**

Die Erfindung betrifft ein Verfahren gemäß dem Oberbegriff des Patentanspruchs 1 sowie ein Messgerät zur Durchführung eines Verfahrens gemäß dem Oberbegriff des Patentanspruchs 6. Ferner betrifft die Erfindung einen Datenträger, auf dem ein Computerprogramm zur Durchführung des erfindungsgemäßen Verfahrens abgespeichert ist.

Aus der EP 1 464 923 A1 (FLOWTEC AG [CH]) vom 6. Oktober 2004 ist eine Vorrichtung zur Überwachung eines Messumformers eines Feldgeräts zur Bestimmung und/oder Überwachung einer physikalischen und/oder chemischen Prozessgröße offenbart. In dem Gehäuse, in dem der Messumformer angeordnet ist, ist zumindest ein Sensor vorgesehen, der über eine Zeitspanne in vorgegebenen Abständen die Temperatur und die relative Luftfeuchte in dem Gehäuse ermittelt. Wobei eine Regel-/Auswerteeinheit vorgesehen ist, die anhand der gemessenen Temperatur- und relativen Luftfeuchtewerte die absolute Luftfeuchte und/oder den Taupunkt in dem Gehäuse des Messumformers bestimmt und einen Alarm ausgibt, wenn die absolute Luftfeuchte und/oder der Taupunkt in dem Gehäuse des Messumformers einen kritischen Wert erreicht.

Zur genauen Bestimmung der Dichte eines Fluids mit einem Biegeschwinger sind stabile Umgebungsbedingungen und definierte Betriebszustände des Biegeschwingers erforderlich. Andernfalls kann die Messung durch störende Umwelteinflüsse, wie z.B. Luftdruck, Luftfeuchtigkeit, Temperatur, Staubpartikel, Chemikaliendämpfe, Stöße und/oder Vibrationen, nachteilig beeinflusst werden, bis hin zur Beschädigung oder Zerstörung des Biegeschwingers bei dauerndem Vorliegen der störenden Beeinflussung.

Insbesondere zur hochgenauen Bestimmung der Dichte von Flüssigkeiten ist eine stabile Temperatur der Messzelle unumgänglich. Die Messtemperatur liegt bei vielen Anwendungen unterhalb der Umgebungstemperatur. Typische Messtemperaturen sind 15°C, 20°C, 60°C. Für Spezialanwendungen liegt die Temperatur auch oftmals unter 10°C. Speziell der Betrieb einer Messzelle in einer feucht-warmen Umgebung stellt eine Herausforderung dar, da der Betriebszustand zur Bildung von Kondenswasser in der Messzelle führen kann, was zur Zerstörung dieser führen kann.

Bei vielen Messfehlern und bei Schäden an Geräten im Feldeinsatz können die Ursachen und allenfalls die Verschuldensfrage nicht geklärt werden, da die auslösenden bzw. tatsächlichen Bedingungen nicht rekonstruierbar sind.

Bekannt ist es, Messzellen staub- und gasdicht für Prozessanwendungen zu kapseln und damit den Einfluss der Umgebungsbedingungen zu minimieren. Weiters ist bekannt, die Gehäuse von Messzellen mit Biegeschwingern mit einer Trockenluftspülung auszustatten oder in die Gehäuse Trockenpatronen zu integrieren. Gasdicht verbaute Messzellen sind teuer und technisch nur sehr schwer umsetzbar, zumeist können mit derartigen Lösungen nur bestimmte Beeinflussungen ausgeschlossen werden. Z.B. ist eine Trockenluftspülung oder die Verwendung von Trockenpatronen vor allem hinsichtlich der Fehler durch den Benutzer nur begrenzt betriebssicher. Wird die Trockenluftspülung nicht korrekt angeschlossen, kann sich im Gehäuseinneren Kondenswasser bilden, was zur Zerstörung der Messzelle führen kann.

Ziel der Erfindung ist die Vermeidung der Nachteile bekannter Messgeräte und -verfahren und die Erstellung eines unter unterschiedlichen Umgebungsbedingungen optimal einsetzbaren Messgeräts bzw. Messverfahrens.

Erfindungsgemäß wird für ein Verfahren der eingangs genannten Art vorgeschlagen, dass das Messgerät zumindest einen Sensor für zumindest einen eine vorzunehmende Messung, insbesondere Messreihe, beeinflussenden Umgebungsparameter des Biegeschwingers und/oder des Messgeräts, vorzugsweise Luftfeuchtigkeit und/oder Luftdruck und/oder Lufttemperatur, und eine Zustandsüberwachungseinheit aufweist, und die Messwerte des jeweiligen Sensors der Zustandsüberwachungseinheit zugeführt werden, dass die Zustandsüberwachungseinheit eine Speichereinheit mit eingespeicherten Prognosen und Prädiktionsalgorithmen für im Zuge der Messung zu erwartende Umgebungsparameter und für zu erwartende Betriebszustände aufweist, und dass mit der Zustandsüberwachungseinheit basierend auf den eingespeicherten Prognosen und Algorithmen sowie abhängig von den vorhandenen und/oder erwarteten Werten der Umgebungsparameter und den für die Messung gewählten Ausgangsmesswerten bzw. -bedingungen ermittelt wird, ob die geplante Messung, insbesondere Messreihe, unter den gewählten Versuchsbedingungen und/oder den bei Messbeginn vorhandenen Ausgangswerten und/oder mit den im Laufe der Messung gewählten bzw. erwarteten Parameterwerten ohne eine oder mit einer zulässigen Beeinträchtigung durch die erwarteten bzw. prognostizierten Änderungen in den Umgebungsparametern durchgeführt werden kann.

Erfindungsgemäß wird für eine Vorrichtung der eingangs genannten Art vorgeschlagen, dass das Messgerät zumindest einen Sensor für zumindest einen eine vorzunehmende Messung, insbesondere Messreihe, beeinflussenden Umgebungsparameter des Biegeschwingers und/oder des Messgeräts, vorzugsweise Luftfeuchtigkeit und/oder Luftdruck und/oder Lufttemperatur, und eine Zustandsüberwachungseinheit aufweist, der die Messwerte des jeweiligen Sensors zugeführt sind, und dass die Zustandsüberwachungseinheit eine Speichereinheit mit eingespeicherten Prognosen und Prädiktionsalgorithmen für die Ermittlung von im Zuge der Messung zu erwartenden Werten der Umgebungsparameter umfasst und basierend auf den eingespeicherten Prognosen und Algorithmen sowie abhängig von den vorhandenen und/oder vorgegebenen Werten der Umgebungsparameter und den für die Messung gewählten Ausgangswerten der Umgebungsparameter ermittelt wird, ob die geplante Messung, insbesondere Messreihe, unter den gewählten Versuchsbedingungen und/oder mit den gewählten Ausgangswerten und/oder mit den im Laufe der Messung gewählten bzw. erwarteten Parameterwerten ohne eine oder mit einer zulässigen Beeinträchtigung durch die erwarteten bzw. prognostizierten Änderungen der Umgebungsparameter durchführbar ist.

Die Zustandsüberwachungseinheit bzw. die an diese angeschlossenen Sensoren messen und speichern gegebenenfalls alle relevanten Umgebungsparameter, die Einfluss auf das Messergebnis und/oder auf die Lebensdauer des Biegeschwingers haben können. Ferner erstellt sie Prognosen betreffend die zukünftigen Werte und/oder Änderungen der Parameter durch Prädiktionsalgorithmen. Die erfassten Parameter können z.B. Luftdruck, Luftfeuchtigkeit, Temperatur, Staubpartikel, Chemikaliendämpfe, Stöße und/oder Vibrationen, sein. Schließlich steuert die Zustandsüberwachungseinheit auch Stellglieder zur Einstellung der Parameter in der nahen Umgebung der Messzelle bzw. in der Messzelle. Es handelt sich hier vor allem um Bereiche bis zu etwa 100 cm um die Messzelle bzw. den Biegeschwinger, bevorzugt aber um Bereiche im Gehäuse des Messgerätes, da die Atmosphäre im Gehäuse für den Betrieb des Schwingers signifikant ist und beispielsweise die Eigenerwärmung des Systems durch die Messbedingungen berücksichtigt werden kann. Gegebenenfalls kann auch eine Kombination von Sensoren außerhalb und innerhalb des Gehäuses verwendet werden.

Über ein User-Interface wird dem Benutzer der aktuelle und prognostizierte Betriebszustand des Messgeräts abhängig von den Umgebungsparametern, z.B. eine zu erwartende Taupunktunterschreitung bei Einstellung einer zu niedrigen Messzellentemperatur, mitgeteilt. Zusätzlich kann vor Beginn einer Messung durch die Zustandsüberwachungseinheit abgeschätzt werden, ob die Messung insbesondere bei unterschiedlichen Betriebsparametern des Biegeschwingers, bei den zu erwartenden und/oder herrschenden Umgebungsbedingungen ohne Zusatzmaßnahmen bzw. innerhalb eines gültigen Betriebszustands ohne unerwünschte Beeinflussungen durchführbar ist. Eine derartige präventive Funktion verhindert, dass der Benutzer unnötige Zeit für Messungen, die nicht korrekt durchführbar sind, vergeudet.

Die Erfindung bietet ferner die Möglichkeit, durch die Speicherung der im Einsatz des Geräts aufgetretenen Betriebszustände und Umgebungsvariablen bzw. -parameter, den Hergang von Ausfällen und Messfehlern leichter rekonstruieren zu können.

Durch die Erfindung kann die Bauweise von Messzellen, die empfindliche Sensorik enthalten, kostengünstiger gestaltet und vereinfacht werden, z.B. ist eine Kapselung der Biegeschwinger nicht mehr erforderlich, da der korrekte Betriebszustand durch die Zustandsüberwachungseinheit überwacht bzw. für die Zukunft vorhergesagt bzw. gewährleistet wird.

Von Vorteil ist es, wenn das Messgerät zumindest ein Stellglied zur Einstellung oder Einregelung von zumindest einem Umgebungsparameter aufweist, mit welchem Stellglied zumindest ein Umgebungsparameter vor und/oder während der Messung abhängig von von der Zustandsüberwachungseinheit ermittelten oder vorgegebenen Korrekturwerten, vorzugsweise von der Zustandsüberwachungseinheit, eingeregelt oder eingestellt wird.

Über die von der Zustandsüberwachungseinheit angesteuerten Stellglieder zur Regulierung der Umgebungsbedingungen außerhalb bzw. um die Zelle herum und/oder innerhalb der Messzelle können automatisch geeignete Maßnahmen ergriffen werden, um den gültigen bzw. gewünschten Betriebszustand für eine komplette Messung zu gewährleisten, z.B. eine automatische Trockenluftspülung bei Tieftemperaturversuchen, die ohne Trockenluftspülung zu einer Kondensation in der Messzelle führen und die Messergebnisse verfälschen bzw. zu einer Zerstörung des Biegeschwingers führen könnte, oder eine Aktivierung eines Partikelfilters, oder eine Regenerierung einer Trockenpatrone und/oder eines Partikelfilters, oder eine Reduktion des Luftvolumens im Innenraum der Messzelle des Geräts, oder ein aktiver Vibrationsausgleich oder eine mechanische Kapselung. Die erforderlichen Komponenten bzw. Stellglieder zur Beseitigung von störenden Umgebungsbedingungen und Beeinflussungen können auch im Messgerät selbst verbaut sein, z.B. in Form eines integrierten Membrantrockners und einer Ansteuerung einer internen Luftpumpe.

Von Vorteil ist es, als Umgebungsparameter den Luftdruck, die Lufttemperatur und/oder die relative Luftfeuchte in der nahen Umgebung der Messkammer zu überwachen bzw. zu ermitteln, z.B. im Umkreis von einem Meter oder im Gehäuse des Messgerätes, und z.B. die Taupunkttemperatur aus den genannten Parametern zu ermitteln. Der Zusammenhang dieser Parameter ist bekannt und kann aus der Magnus-Formel zur Beschreibung des Sättigungsdampfdruckes abgeleitet werden. Unterschreitet die Messzellentemperatur die Taupunkttemperatur kann der Sensor automatisch darauf reagieren und teilt dem Benutzer und der Zustandsüberwachungseinheit mit, dass der Taupunkt unterschritten wurde. Die Zustandsüberwachungseinheit erhöht die Messzellentemperatur selbstständig oder über Eingabe des Benutzers, um ein Beschlagen der Messzelle zu verhindern. Bei einer Spülung mit trockener Luft dient der Sensor zur Überwachung der Trockenluftspülung. Wird diese ausgeschaltet oder versagt diese, kann dies mittels der Sensorik erkannt werden und der Benutzer wird gewarnt bzw. das Messgerät wird in einen sicheren Betriebszustand gebracht, da der Luftfeuchtigkeitssensor nur solange funktioniert, als sich der Wasserdampf nicht als Tau abscheidet. Für diesen Fall kann zusätzlich ein Taupunktsensor an einer geeigneten Stelle, d.h. der kältesten Stelle, direkt in der Messzelle platziert werden. Dies kann z.B. durch einen kapazitiven Sensor realisiert werden. Eine wichtige Möglichkeit ist die Analyse des zeitlichen Verlaufs der Zustandsparameter zur Extrapolation bzw. Prädiktion des Verlaufs der Taupunkttemperatur zur Früherkennung einer Taupunktunterschreitung.

Die Erfindung bietet die vorteilhafte Möglichkeit einer Analyse des zeitlichen Verlaufs der Zustandsparameter zur Extrapolation des Verlaufs der Störgröße zur Früherkennung des problematischen Betriebszustands bereits vor dessen Erreichen.

Bedeutsam ist ferner die Möglichkeit einer Speicherung der im Einsatz des Geräts aufgetretenen Betriebszustände und der sich ändernden Umgebungsparameter, um den Hergang von Ausfällen leichter rekonstruieren zu können.

Die ins Gehäuse bzw. in die Messzelle dringenden Störungen aus der Umgebung können speziell im Falle von Biegeschwingern viele Probleme bedingen; z.B. Ablagerung von Staub und Niederschlag von Feuchtigkeit auf dem Biegeschwinger bewirkt, dass der Biegeschwinger seine Frequenz ändert, womit die optische Erkennung von Blasen erschwert wird. Vibrationen können die Messwerte für die Eigenfrequenz stören oder durch Ausreißer Fehlmessungen in der Mittelwertbildung bedingen. Stark abweichende Umgebungstemperaturen können zu Drift in einem temperierten Biegeschwinger führen. Diese Einflüsse können erfindungsgemäß eliminiert werden.

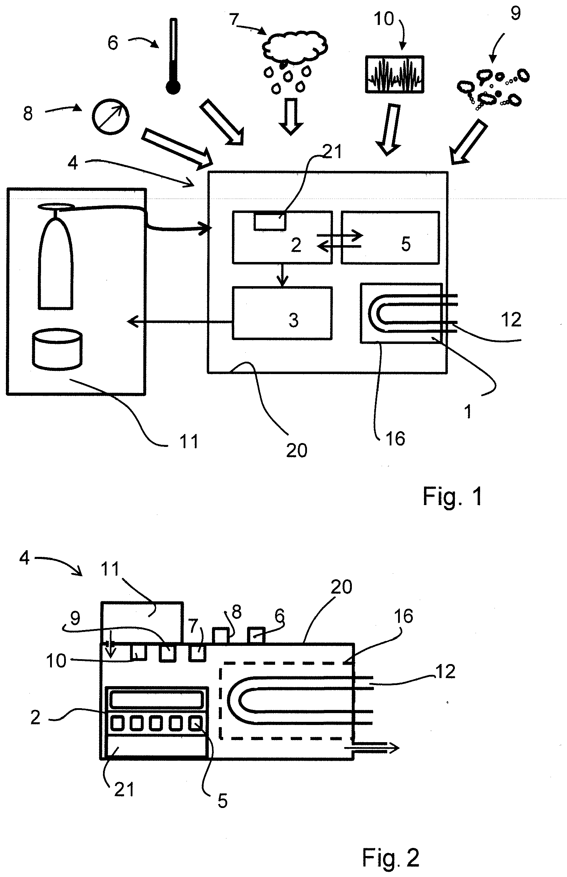

Anhand der Fig. 1 und 2 wird die Erfindung näher erläutert.

Fig. 1 zeigt schematisch den Aufbau eines erfindungsgemäßen Messgeräts. Fig. 2 zeigt schematisch ein erfindungsgemäßes Messgerät im Schnitt.

Ein erfindungsgemäßes Messgerät, im vorliegenden Fall ein Messgerät zur Ermittlung der Dichte von Flüssigkeiten, umfasst einen Biegeschwinger 12, der innerhalb eines vorteilhafterweise offenen Gehäuses 20 angeordnet ist und mit diesem Gehäuse 20 eine Messzelle 1 ausbildet. Dem Biegeschwinger 12 wird die zu untersuchende Flüssigkeit, wie an sich bekannt, an seinen Enden zugeführt bzw. abgeleitet und die Messwerte der Schwingung werden abgenommen und ausgewertet. Die dazu erforderlichen Einheiten sind bekannt und nicht dargestellt. Wie in Fig. 1 schematisch dargestellt, umfasst das Messgerät 4 die Messzelle 1, die in ihrem Gehäuse 20 den Biegeschwinger 12 aufnimmt und eine entsprechende Probenzufuhr 22 umfasst. Ferner umfasst das Messgerät 4 eine Zustandsüberwachungseinheit 2 mit einer Speichereinheit 21, in der eingespeicherte Prognosen und Prädiktionsalgorithmen für im Zuge der Messung zu erwartende Änderungen von Umgebungsparametern enthalten sind. An die Zustandsüberwachungseinheit 2 sind Stellglieder 3 angeschlossen. Ein derartiges Stellglied 3 ist beispielsweise zur Betätigung einer Zufuhreinrichtung von Frischluft 11 bzw. einer Filtereinheit vorgesehen. Des Weiteren ist an die Zustandsüberwachungseinheit 2 eine Anzahl von auf unterschiedliche Umgebungsparameter ansprechenden Sensoren angeschlossen. Insbesondere kann dies ein Sensor 6 zur Temperaturmessung und/oder ein Sensor 7 zur Feuchtigkeitsmessung der das Messgerät 4 umgebenden Luft bzw. der in der Messzelle 20 befindlichen Luft, sein. Des Weiteren kann ein Sensor 8 zur Bestimmung des Luftdrucks, ein Sensor 9 zur Bestimmung des Staubgehalts der das Messgerät 4 umgebenden Luft bzw. des in der Messzelle 1 befindlichen Staubs vorhanden sein. Es kann auch ein Sensor 10 zur Bestimmung von auf das Messgerät 4 einwirkenden Stößen und/oder Vibrationen vorgesehen sein. Diese Sensoren 6, 7, 8, 9, 10 geben ihre Messwerte an die Zustandsüberwachungseinheit 2 ab, welche anhand der eingespeicherten Prognosen und Algorithmen die Messbedingungen für eine geplante Messung erstellen. Kommt die Zustandsüberwachungseinheit 2 zu dem Ergebnis, dass die Messung unbeeinflusst von diesen Umwelt- bzw. Umgebungsparametern vorgenommen werden kann, so wird die Abgabe eines Warnsignals unterdrückt bzw. wird die Messung zugelassen. Stellt die Zustandsüberwachungseinheit eine Überschreitung eines vorgegebenen Grenzwerts durch zumindest einen Messwert eines Umgebungsparameters zum Ermittlungszeitpunkt der Parameterwerte oder für die Zukunft fest, so wird ein Warnsignal abgegeben bzw. wird die Durchführung der Messung verhindert.

In Fig. 2 ist ein Messgerät 4 dargestellt, das mit seinem Gehäuse 20 den Biegeschwinger 12 mit seiner Kapselung 16 aufnimmt. Als Stellglied wird eine Einheit 11 zur Zufuhr von Schutzgas und/oder Trockenluft vorgesehen, die abhängig von der Steuerung der Zustandsüberwachungseinheit 2 steuerbar ist. Mit 5 ist eine Eingabe-Ausgabe-Einheit bzw. ein User-Interface für die Zustandsüberwachungseinheit 2 bezeichnet, mit der Zustandsüberwachungseinheit 2 entsprechende Befehle übermittelt werden können bzw. in die ein Datenträger für von der Zustandsüberwachungseinheit 2 abzuarbeitenden Programme, allenfalls mit eingespeicherten Prognosen und Prädiktionsalgorithmen eingegeben werden kann.

Die Zustandsüberwachungseinheit 2 kann über das User-Interface 5 mit dem Benutzer kommunizieren. Über das User-Interface 5 werden entsprechende Befehle eingegeben bzw. Messwerte und Daten ausgelesen.

Der Erfindung liegt vor allem die Idee zugrunde, ein Messgerät 4 mit zusätzlichen Sensoren 6, 7, 8, 9, 10 im Gehäuse 20 oder am Gehäuse 20 auszustatten, die den Betriebszustand des Messgeräts 4 auf sichere, normgerechte Bedingungen im Inneren des Gehäuses 20 des Biegeschwingers 12 und/oder in der Umgebung eines offenen Gehäuses 20 des Messgeräts 4 und/oder Biegeschwingers 12 überprüfen.

Vorteilhaft ist es, wenn bei Erreichen bestimmter Temperaturwerte bzw. bereits bei Vorgabe einer gewählten Temperatur aufgrund der Atmosphären- bzw. Umgebungsparameter im Geräteinneren bzw. Inneren des Gehäuses 20 des Biegeschwingers 12 die relative Luftfeuchte vorausbestimmt und damit noch vor dem Kühlbeginn die eintretenden Verhältnisse voraussagt. Es ist ferner vorteilhaft, eine Überwachung und Vorausberechnung des Taupunktes aufgrund des gewünschten Temperaturprofils und der Umgebungsparameter vorzunehmen.

Es ist möglich, dem Benutzer eine Warnung auszugeben, wenn die gewählten Versuchsparamter nicht sicher sind.

Ferner kann eine Definition von Grenzwerten für bestimmte Genauigkeitsklassen vorgeben werden und/oder dem Benutzer vorschlagen werden, dass bestimmte Werte von Umgebungsparametern durch die Verwendung bestimmter Vorkehrungen bzw. Stellglieder erreicht oder nicht erreicht werden können, z.B. durch Spülung mit Trockenluft, durch Anpassung der Klimabedingungen im Raum um das Messgerät, durch Senken der Temperatur und/oder Entfeuchten, durch Inbetriebnahme einer Klimaanlage und/oder durch Senken der Temperatur im Raum über die Klimaanlage, alles im Umgebungsbereich des Messgeräts.

Wesentlich ist die Vorhersage eines gültigen Betriebszustands für den Biegeschwinger 12 und die Bewertung der gewählten Versuchsbedingungen. Beim Abkühlen unter die Raumtemperatur können z.B. der Taupunkt vorausberechnet und aus den Daten für die umgebende Luft die Zulässigkeit einer Abkühlung innerhalb gewisser Grenzen geprüft werden.

Es sind somit Sensoren 6, 7, 8, 9, 10 vorgesehen, mit denen zumindest ein Umgebungsparameter, z.B. Feuchte, Temperatur, Staub und/oder Vibrationen, gemessen wird. Für die Taupunktsbestimmung sind z.B. Sensoren für die Temperatur und die Luftfeuchtigkeit und gegebenenfalls den Luftdruck erforderlich.

Der Biegeschwinger 12 kann z.B. mit einer zusätzlichen Temperiereinheit ausgestattet werden, wobei ein an die Zustandsüberwachungseinheit 2 angeschlossener Sensor 6 die Temperatur der Probe oder des Biegeschwingers 12 misst. Eine weitere Möglichkeit zur Überwachung der Messung ist beispielsweise die Überwachung des Probendrucks, z.B. bei der Befüllung des Biegeschwingers 12.

Es wird erfindungsgemäß möglich, eine Kapselung 16 des Biegeschwingers 12 vor allem für Prozessanwendungen wegzulassen; man kann den Biegeschwinger 12 vor allem dann auch ohne Umhüllung betreiben, wenn die Luft im Gehäuse 20 trocken genug gehalten wird.

Für genaue Messgeräte aber auch für z.B. fluiddicht gekapselte Prozessgeräte sind bestimmte Gerätebedingungen einzuhalten. Diese werden normalerweise in der Beschreibung bzw. Bedienungsanleitung für die jeweilige Genauigkeitsklasse des Biegeschwingers spezifiziert. Abweichungen von diesen Bedingungen sind für den Benutzer nicht immer erkennbar. Erfindungsgemäß werden die Umgebungsbedingungen kontrolliert und/oder vorgegeben; damit kann mit den vorgeschlagenen Sensoren die Einhaltung der Gerätebedingungen auch überprüft werden.

Bei Eingabe von Versuchsabläufen ist eine Vorausberechnung der gültigen Versuchsbedingungen auf Basis der vorab gemessenen Umgebungsparameterwerte möglich. So kann einer Temperaturregelung und/oder Temperiereinheit des Schwingers dieser gegebenenfalls an einem unerwünschten Abkühlen gehindert werden.

Bei Eingabe des Temperaturprofils kann beispielsweise

i) aus der Magnusformel der Taupunkt abgeschätzt werden:

Der bei einer bestimmten Temperatur maximal mögliche Wasserdampfdruck wird als Sättigungsdampfdruck bezeichnet. Für die Berechnung des Sättigungsdampfdruckes über Wasser und Eis gibt es in der Literatur für die einzelnen Temperaturbereiche eine Vielzahl von Näherungsformeln, eine davon ist die Magnus-Formel, sie gilt näherungsweise über Wasser für einen Temperaturbereich von -50 bis +100°C: Der Sättigungsdampfdruck $e_{sat,W}$ von Wasserdampf in Pascal (für den Normalluftdruck von 101325 Pa) ergibt sich aus der Temperatur T in °C

$$e_{sat,W} = 611{,}12 \cdot \exp\left(\frac{17{,}62 \cdot T}{243{,}12 + T}\right)$$

ii) aus einer Näherungsformel über die Taupunkttemperatur berechnet werden, die diejenige Temperatur bezeichnet, bei der die Wasserdampfsättigungskonzentration bzw. der Wasserdampfsättigungsdruck der Luft erreicht ist.

Die relative Luftfeuchtigkeit beträgt in diesem Zustand $\phi = 1$. Wird die feuchte Luft unter die Taupunkttemperatur abgekühlt, kommt es zu einem Phasenwechsel von gasförmig zu flüssig und ein Teil des in der Luft enthaltenen Wasserdampfes wird als überschüssige Feuchtigkeit in flüssiger Form als Tauwasser ausgeschieden, wobei gilt:

$$t_\tau = \varphi^{\frac{1}{8{,}02}} \cdot (109{,}8 + t) - 109{,}8$$

(mit $\phi$... relative Luftfeuchtigkeit, T...Temperatur in °C)

Je nach gewünschter Genauigkeitsklasse und den zur Verfügung stehenden Sensoren können auch andere Näherungslösungen ggf. unter Berücksichtigung des Luftdruckes in der als Auswerteeinheit fungierenden Zustandsüberwachungseinheit 2 hinterlegt werden. Für andere Umgebungsparameter gelten andere Algorithmen.

In vielen Betriebsfällen ist das aufwändige ständige Spülen mit Trockenluft nicht nötig, da die Betriebsbedingungen hinsichtlich Temperatur und externer Luftfeuchte ausreichen, um einen kondensationsfreien Betrieb des Messgeräts 4 zu ermöglichen. Bei extremen Witterungsbedingungen und extremen Messbedingungen, z.B. tiefe Temperaturen, ist dann das Zuschalten von Trockenluft zwingend erforderlich - entweder kann der Benutzer über das User-Interface 5 dazu aufgefordert werden, das zu tun, oder das passiert automatisch über ein Stell- und/oder Regelglied 11 bzw. die Zustandsüberwachungseinheit 2.

Für alle Messgeräte mit Biegeschwingern 12 in nicht dichtem bzw. offenem Gehäuse 20 ist die Erfindung relativ einfach und kostengünstig umsetzbar.

Benutzer können in vielen Fällen das Messgerät gefahrlos betreiben bzw. werden auf Messungen aufmerksam gemacht, die außerhalb der Normbedingungen liegen - und zwar, bevor sie außerhalb der Normbedingungen zu liegen kommen.

Es ist auch möglich, mit Beschleunigungssensoren im MEMS-Technik, auf den Biegeschwinger einwirkende Stöße, Auslenkungen und Vibrationen zu detektieren. Beispielsweise könnte damit eine in der Umgebung des Messgeräts 4 laufende Pumpe aufgrund der Vibrationssensoren 10 vor der Messung detektiert werden. Damit kann bereits vor Beginn der Messung eine Warnung ausgegeben werden, dass die Messung fehlerbehaftet sein kann. Messwerte, die zeitlich mit einem Stoß oder einer unzulässigen Auslenkung einhergehen, können von der Zustandsüberwachungseinheit 2 erkannt und verworfen werden. Gegebenenfalls kann auch ein aktives System die Schwingungen ausregeln.

Vorab definierte Grenzwerte können auch auf eine gewünschte Genauigkeitsklasse der Messung abgestimmt und vorgegeben werden.

Es ist auch möglich, optische Sensoren, tribologische Sensoren usw. zur Messung einzusetzen, z.B. zur Messung der Staubkonzentration in der Umgebung des Messgeräts 4 oder auch im Inneren des Gehäuses 20. Auch die Zuschaltung einer Spülung mit sauberer und/oder trockener Luft für das Gehäuse 20 und/oder den Biegeschwinger 12 und/oder den Staubsensor ist automatisch möglich. Auch eine automatische Filterung des Gehäuseinneren über einen Filter und die Zufuhr von Umluft mit geringem Überdruck, beispielsweise Umwälzen mit einer kleine Pumpe durch einen Filter und/oder die Zufuhr von sauberem Spülgas sind möglich.

Ein Sensor 6, 7, 8, 9, 10 für die Überwachung von zu erwartenden anwendungsspezifischen und die Messung beeinträchtigenden Umgebungsparametern kann in der Umgebung des Gehäuses 20 über eine Schnittstelle angeschlossen werden und benutzerspezifische Grenzwerte für diesen Parameter können über eine Eingabeeinheit in das Programm der Zustandsüberwachungseinheit 2 integriert werden.

Bei der Messung mit dem Biegeschwinger 12 kann dann auch in Abhängigkeit von den jeweils eingegeben Grenzwerten die Genauigkeitsklasse des Messgeräts 4 aufgrund der gemessenen Umgebungsparameter beschränkt werden. Die Angabe von nicht aussagekräftigen Nachkommastellen für die Dichtemessung durch Kürzen und/oder Runden kann unterdrückt werden; es kann auch eine Warnung zusätzlich zur Ausgabe hinterlegt werden.

Wird bei Ausgabe einer Warnung, dass die Betriebsbedingungen nicht sicher sind, die Messung trotzdem durchgeführt, werden der Zustand bzw. die Parameter gespeichert und gegebenenfalls erlischt die Gerätegarantie oder die Versuchsdurchführung wird zugelassen und der Biegeschwinger 12 wird von der Zustandsüberwachungseinheit 2, z.B. über eine Temperiereinheit, auf eine gültige Temperatur gebracht. Dies kann auch ohne spezielle Anforderung zur Messung bei entsprechender Entwicklung der Umgebungsbedingungen erfolgen. Z.B. kann eine hohe Dampfkonzentration in der Umgebung automatisch zum Heizen des Biegeschwingers 12 mit der Temperiereinheit führen, um sichere Bedingungen auch im "stand by" zu gewährleisten.

Bei Verwendung eines nichtflüchtigen Speichers, der nicht korrekte Betriebsbedingungen speichert und für die Wartung und/oder Garantie zur Verfügung stellt, kann bei häufigem Verletzen der erlaubten Betriebsbedingungen der Benutzer zur Überprüfung oder Wartung des Geräts aufgefordert werden.

Die Anzeigen erfolgen unabhängig vom jeweiligen Messprinzip durch zusätzliche Sensoren; die Software dafür wird für den jeweiligen Einsatzbereich angepasst.

Die Zustandsüberwachungseinheit 2 kann auch als Recheneinheit fungieren, die alle Berechnungen vornehmen, erfindungsgemäße Datenträger auslesen und/oder allenfalls Messwerte und Parameter abspeichern kann.

Erfindungsgemäß kann der Einfluss der Umgebungstemperatur auf das Messergebnis bestimmt werden. Wird eine Messreihe gestartet, kann die Umgebungstemperatur bei jedem einzelnen Messwert mitgeloggt werden und aufgrund des bekannten Einflusses und der Temperaturänderung kann am Ende der Messreihe die Unsicherheit aufgrund dieses Effekts angegeben werden.

Wird die Historie der Umgebungstemperatur aufgezeichnet, kann mit einer gewissen Wahrscheinlichkeit vorhergesagt werden, wie unsicher das Messergebnis einer Messreihe sein wird. Durch die Bestimmung der Abweichung der Umgebungstemperatur zur Umgebungstemperatur bei der Justierung kann die erwartete Unsicherheit aufgrund dieses Einflusses vorhergesagt werden.

Dieser Effekt ist speziell bei hochpräzisen Messungen nicht zu vernachlässigen.

Bei nicht gekapselten Schwingervarianten führt ein dauernder Betrieb mit kalten Flüssigkeiten unter dem Taupunkt dazu, dass die feuchte Luft am Schwingerrohr kondensiert, was eine Verfälschung des Messergebnisses zur Folge hat. Diese Abhängigkeit kann für die Geräteklasse in einer Testreihe bestimmt werden. Im Betrieb kann aufgrund der Berechnung des Taupunkts durch die Umgebungstemperatur, den Luftdruck und die Luftfeuchtigkeit der Taupunkt ermittelt werden. Anhand der Messung der Probentemperatur und der Dauer der Füllung kann rechnerisch ermittelt werden, ob die Messung gültig ist und im idealen Fall die erwartete Unsicherheit bestimmt werden.

Durch Aktivierung einer Selbstüberwachung bei thermostatisierten Messgeräten kann das Messgerät nach einer erfolgten Messreihe unterhalb des Taupunkts automatisch wieder in den sicheren Temperaturbereich übergeführt oder durch kurzes Aufheizen der Messzelle diese getrocknet werden.

Die Umgebungsparameter werden in unmittelbarer Umgebung des Biegeschwingers und/oder des Messgeräts und/oder innerhalb des Messgeräts und/oder innerhalb des Gehäuses des Biegeschwingers ermittelt.

**Patentansprüche**

1. Verfahren zur Bestimmung der Dichte von Flüssigkeiten mit einem einen Biegeschwinger (12) umfassenden Messgerät (4), wobei der Biegeschwinger (12) dem Gehäuse des Messgeräts (4) aufgenommen ist, **dadurch gekennzeichnet,**

   - **dass** das Messgerät (4) zumindest einen Sensor (6, 7, 8, 9, 10) für zumindest einen eine vorzunehmende Messung, insbesondere Messreihe, beeinflussenden Umgebungsparameter des Biegeschwingers (12) und/oder des Messgeräts (4), vorzugsweise Luftfeuchtigkeit und/oder Luftdruck und/oder Lufttemperatur, und eine Zustandsüberwachungseinheit (2) aufweist, und die Messwerte des jeweiligen Sensors (6, 7, 8, 9, 10) der Zustandsüberwachungseinheit zugeführt (2) werden,
   - **dass** die Zustandsüberwachungseinheit (2) eine Speichereinheit (21) mit eingespeicherten Prognosen und Prädiktionsalgorithmen für im Zuge der Messung zu erwartende Umgebungsparameter und für zu erwartende Betriebszustände aufweist, und
   - **dass** mit der Zustandsüberwachungseinheit (2) basierend auf den eingespeicherten Prognosen und Algorithmen sowie abhängig von den vorhandenen und/oder erwarteten Werten der Umgebungsparameter und den für die Messung gewählten Ausgangsmesswerten bzw. -bedingungen ermittelt wird, ob die geplante Messung, insbesondere Messreihe, unter den gewählten Versuchsbedingungen und/oder den bei Messbeginn vorhandenen Ausgangswerten und/oder mit den im Laufe der Messung gewählten bzw. erwarteten Parameterwerten ohne eine oder mit einer zulässigen Beeinträchtigung durch die erwarteten bzw. prognostizierten Änderungen in den Umgebungsparametern durchgeführt werden kann.

2. Verfahren nach Anspruch 1, **dadurch gekennzeichnet, dass** das Messgerät (4) zumindest ein Stellglied (11) zur Einstellung oder Einregelung von zumindest einem Umgebungsparameter aufweist, mit welchem Stellglied (11) zumindest ein Umgebungsparameter vor und/oder während der Messung abhängig von von der Zustandsüberwachungseinheit (2) ermittelten oder vorgegebenen Korrekturwerten, vorzugsweise von der Zustandsüberwachungseinheit (2), eingeregelt oder eingestellt wird.

3. Verfahren nach Anspruch 1 oder 2, **dadurch gekennzeichnet, dass** mit der Zustandsüberwachungseinheit (2) das Messgerät (4) auf sichere, normgerechte Bedingungen im Inneren des Messgeräts (4) und/oder in der Umgebung des gegebenenfalls offenen Gehäuses (20) des Biegeschwingers (12) überprüft wird.

4. Verfahren nach einem der Ansprüche 1 bis 3, **dadurch gekennzeichnet,**

   - **dass** bei Erreichen bestimmter Temperaturwerte bzw. bereits bei Vorgabe einer Temperatur aufgrund der vorliegenden Atmosphärenbzw. Umgebungsparameter im Geräteinneren bzw. Inneren der Messzelle bzw. des Gehäuses (20) des Biegeschwingers (12) die relative Luftfeuchte vorausbestimmt wird und noch vor dem Beginn eines erforderlichen Abkühlens die eintretenden Verhältnisse im Voraus ermittelt werden und/oder
   - **dass** eine Überwachung und Vorausberechnung des Taupunkts aufgrund eines vorgegebenen, eingespeicherten Temperaturprofils und der vorliegenden Umgebungsparameter vorgenommen wird.

5. Verfahren nach einem der Ansprüche 1 bis 4, **dadurch gekennzeichnet,**

   - **dass** von der Zustandsüberwachungseinheit (2) eine Warnung ausgegeben wird, wenn die gewählten Versuchsbedingungen nicht sicher sind bzw. eine korrekte Messung nicht zulassen, und/oder
   - **dass** eine Definition von Grenzwerten für bestimmte Genauigkeitsklassen für eine Überschreitung von zulässigen Parametern vorgegeben wird.

6. Messgerät zur Bestimmung der Dichte von Flüssigkeiten umfassend einen Biegeschwinger (12), der von dem Gehäuse des Messgeräts (4) aufgenommen ist, insbesondere zur Durchführung des Verfahrens nach einem der Ansprüche 1 bis 5, **dadurch gekennzeichnet, dass** das Messgerät (4) zumindest einen Sensor (6, 7, 8, 9, 10) für zumindest einen eine vorzunehmende Messung, insbesondere Messreihe, beeinflussenden Umgebungsparameter des Biegeschwingers (12) und/oder des Messgeräts (4), vorzugsweise Luftfeuchtigkeit und/oder Luftdruck und/oder Lufttemperatur, und eine Zustandsüberwachungseinheit (2) aufweist, der die Messwerte des jeweiligen Sensors (6, 7, 8, 9, 10) zugeführt sind, und dass die Zustandsüberwachungseinheit (2) eine Speichereinheit (21) mit eingespeicherten Prognosen und Prädiktionsalgorithmen für die Ermittlung von im Zuge der Messung zu erwartenden Werten der Umgebungsparameter umfasst und basierend auf den eingespeicherten Prognosen und Algorithmen sowie abhängig von den vorhandenen und/oder vorgegebenen Werten der Umgebungsparameter und den für die Messung gewählten Ausgangswerten der Umgebungsparameter ermittelt wird, ob die geplante Messung, insbesondere Messreihe, unter den gewählten Versuchsbedingungen und/oder mit den gewählten Ausgangswerten und/oder mit den im Laufe der Messung gewählten bzw. erwarteten Parameterwerten ohne eine oder mit einer zulässigen Beeinträchtigung durch die erwarteten bzw. prognostizierten Änderungen der Umgebungsparameter durchführbar ist.

7. Messgerät nach Anspruch 6, **dadurch gekennzeichnet, dass** dem Messgerät (4) zumindest ein Stellglied (11) zur Einstellung oder Einregelung von zumindest einem Umgebungsparameter zugeordnet ist, mit dem zumindest ein Umgebungsparameter vor und/oder während der Messung abhängig von von der Zustandsüberwachungseinheit (2) ermittelten oder vorgegebenen Korrekturwerten regelbar oder einstellbar ist.

8. Messgerät nach Anspruch 6 oder 7, **dadurch gekennzeichnet, dass** das Stellglied (11) von der Zustandsüberwachungseinheit (2) regelbar oder einstellbar ist.

9. Messgerät nach einem der Ansprüche 6 bis 8, **dadurch gekennzeichnet, dass** als Stellglieder (11) Einrichtungen zur Einstellung der Temperatur und/oder des Luftdrucks und/oder der Feuchtigkeit und/oder der Luftzusammensetzung bzw. des Luftstaubgehalts für das Messgerät (4) und/oder für dessen nahe Umgebung und/oder für den Umgebungsbereich des Biegeschwingers (12) vorgesehen sind.

10. Messgerät nach einem der Ansprüche 6 bis 9, **dadurch gekennzeichnet, dass** die Zustandsüberwachungseinheit (2) als Sensoren (6, 7, 8, 9, 10) Sensoren für die Temperatur und/oder Feuchtigkeit und/oder Luftdruck und/oder Staubkonzentration und/oder Vibrationen und/oder Stöße umfasst.

11. Datenträger, auf dem ein Computerprogramm abgespeichert ist, welches Befehle umfasst, die bewirken, dass die Vorrichtung nach einem der Ansprüche 6 bis 10 die Verfahrensschritte nach einem der Ansprüche 1 bis 5 ausführt.

**Claims**

1. Method for determining the density of liquids using a measuring device (4) comprising a flexural resonator (12), wherein the flexural resonator (12) is accommodated in the housing of the measuring device (4), **characterised in that**

    - the measuring device (4) has at least one sensor (6, 7, 8, 9, 10) for at least one environmental parameter of the flexural resonator (12) and/or of the measuring device (4), preferably atmospheric humidity and/or air pressure and/or air temperature, that influences a measurement to be performed, in particular a series of measurements to be performed, and said measuring device has a condition monitoring unit (2), and the measured values from the respective sensor (6, 7, 8, 9, 10) are fed to the condition monitoring unit (2),
    - the condition monitoring unit (2) has a memory unit (21) with stored forecasts and prediction algorithms for environmental parameters to be expected in the course of the measurement and for operating states to be expected, and
    - using the condition monitoring unit (2), on the basis of the stored forecasts and algorithms and depending on the present and/or expected values of the environmental parameters and the initial measured values or conditions selected for the measurement, it is determined whether the planned measurement, in particular series of measurements, can be carried out under the selected trial conditions and/or initial values present at a start of measurement and/or with the parameter values selected or expected in the course of the measurement, without any impairment or with a permissible impairment due to the expected or forecast changes in the environmental parameters.

2. Method according to claim 1, **characterised in that** the measuring device (4) has at least one actuator (11) for setting or controlling at least one environmental parameter, by means of which actuator (11) at least one environmental parameter is controlled or set, preferably by the condition monitoring unit (2), before and/or during the measurement depending on correction values determined or predefined by the condition monitoring unit (2).

3. Method according to claim 1 or 2, **characterised in that** the condition monitoring unit (2) is used to check whether the measuring device (4) is operating in safe, standard-compliant conditions inside the measuring device (4) and/or in the environment of the optionally open housing (20) of the flexural resonator (12).

4. Method according to any one of claims 1 to 3, **characterised in that**

   - when specific temperature values are reached or as early as when a temperature is predefined, the relative humidity is determined in advance on the basis of the atmospheric or environmental parameters present inside the device or inside the measuring cell or the housing (20) of the flexural resonator (12), and the conditions occurring are determined in advance even before the start of a required cooling process and/or
   - monitoring and prior calculation of the dew point are performed on the basis of a predefined, stored temperature profile and the environmental parameters present.

5. Method according to any one of claims 1 to 4, **characterised in that**

   - a warning is output by the condition monitoring unit (2) when the selected trial conditions are not safe or do not permit a correct measurement, and/or
   - a definition of limit values for specific accuracy classes is predefined for the case in which permissible parameters are exceeded.

6. Measuring device for determining the density of liquids, comprising a flexural resonator (12) which is accommodated by the housing of the measuring device (4), in particular for carrying out the method according to any one of claims 1 to 5, **characterised in that** the measuring device (4) has at least one sensor (6, 7, 8, 9, 10) for at least one environmental parameter of the flexural resonator (12) and/or of the measuring device (4), preferably atmospheric humidity and/or air pressure and/or air temperature, that influences a measurement to be performed, in particular a series of measurements to be performed, and said measuring device has a condition monitoring unit (2) to which the measured values from the respective sensor (6, 7, 8, 9, 10) are fed, and the condition monitoring unit (2) has a memory unit (21) with stored forecasts and prediction algorithms for determining environmental parameters to be expected in the course of the measurement, and, on the basis of the stored forecasts and algorithms and depending on the present and/or predefined values of the environmental parameters and the initial values of the environmental parameters selected for the measurement, it is determined whether the planned measurement, in particular series of measurements, can be carried out under the selected trial conditions and/or with the selected initial values and/or with the parameter values selected or expected in the course of the measurement, without any impairment or with a permissible impairment due to the expected or forecast changes in the environmental parameters.

7. Measuring device according to claim 6, **characterised in that** the measuring device (4) is assigned at least one actuator (11) for setting or controlling at least one environmental parameter, by means of which actuator at least one environmental parameter can be controlled or set before and/or during the measurement depending on correction values determined or predefined by the condition monitoring unit (2).

8. Measuring device according to claim 6 or 7, **characterised in that** the actuator (11) can be controlled or set by the condition monitoring unit (2).

9. Measuring device according to any one of claims 6 to 8, **characterised in that** apparatuses for setting the temperature and/or the air pressure and/or the humidity and/or the air composition or the atmospheric dust content for the measuring device (4) and/or for the close surroundings thereof and/or for the surrounding area of the flexural oscillator (12) are provided as actuators (11).

10. Measuring device according to any one of claims 6 to 9, **characterised in that** the condition monitoring unit (2) comprises, as sensors (6, 7, 8, 9, 10), sensors for temperature and/or humidity and/or air pressure and/or dust concentration and/or vibrations and/or shocks.

11. Data carrier on which a computer program is stored and which comprises instructions which cause the device according to any one of claims 6 to 10 to execute the method steps according to any one of claims 1 to 5.

**Revendications**

1. Procédé de détermination de la densité de liquides avec un appareil de mesure (4) comprenant un résonateur de flexion (12), dans lequel le résonateur de flexion (12) est logé dans le boîtier de l'appareil de mesure (4), **caractérisé en ce que**

- l'appareil de mesure (4) présente au moins un capteur (6, 7, 8, 9, 10) pour au moins un paramètre environnemental du résonateur de flexion (12) et/ou de l'appareil de mesure (4) influençant une mesure à effectuer, en particulier une série de mesures, de préférence l'humidité de l'air et/ou la pression atmosphérique et/ou la température de l'air, et une unité de surveillance d'état (2), et les valeurs de mesure du capteur respectif (6, 7, 8, 9, 10) sont amenées à l'unité de surveillance d'état (2),

- l'unité de surveillance d'état (2) présente une unité de mémoire (21) avec des prévisions et des algorithmes de prédiction mémorisés pour des paramètres environnementaux à attendre au cours de la mesure et pour des états de fonctionnement à attendre, et

- il est déterminé, avec l'unité de surveillance d'état (2), en se basant sur les pronostics et algorithmes mémorisés ainsi qu'en fonction des valeurs existantes et/ou attendues des paramètres environnementaux et des valeurs ou conditions de mesure initiales choisies pour la mesure, si la mesure prévue, en particulier la série de mesures, peut être effectuée dans les conditions d'essai choisies et/ou avec les valeurs initiales existantes au début de la mesure et/ou avec les valeurs de paramètres choisies ou attendues au cours de la mesure sans une perturbation ou avec une perturbation admissible en raisons des modifications attendues ou pronostiquées des paramètres environnementaux.

2. Procédé selon la revendication 1, **caractérisé en ce que** l'appareil de mesure (4) présente au moins un élément de réglage (11) pour le réglage ou la régulation d'au moins un paramètre environnemental, élément de réglage (11) avec lequel au moins un paramètre environnemental est réglé ou ajusté avant et/ou pendant la mesure en fonction de valeurs de correction déterminées ou prédéfinies par l'unité de surveillance d'état (2), de préférence par l'unité de surveillance d'état (2).

3. Procédé selon la revendication 1 ou 2, **caractérisé en ce que** l'unité de surveillance d'état (2) permet de vérifier que l'appareil de mesure (4) présente des conditions sûres et conformes aux normes à l'intérieur de l'appareil de mesure (4) et/ou dans l'environnement du boîtier (20) éventuellement ouvert du résonateur de flexion (12).

4. Procédé selon l'une quelconque des revendications 1 à 3, **caractérisé en ce que**

- lorsque certaines valeurs de température sont atteintes ou déjà lorsqu'une température est prédéfinie sur la base des paramètres atmosphériques ou environnementaux présents à l'intérieur de l'appareil ou à l'intérieur de la cellule de mesure ou du boîtier (20) du résonateur de flexion (12), l'humidité relative de l'air est déterminée à l'avance et les conditions qui se produisent sont déterminées à l'avance avant même le début d'un refroidissement nécessaire et/ou

- une surveillance et un calcul anticipé du point de rosée sont effectués sur la base d'un profil de température prédéfini et enregistré et des paramètres environnementaux présents.

5. Procédé selon l'une quelconque des revendications 1 à 4, **caractérisé en ce que**

- un avertissement est émis par l'unité de surveillance d'état (2) lorsque les conditions d'essai choisies ne sont pas sûres ou ne permettent pas une mesure correcte, et/ou

- une définition de valeurs limites pour certaines classes de précision est prédéfinie pour un dépassement de paramètres admissibles.

6. Appareil de mesure pour déterminer la densité de liquides, comprenant un résonateur de flexion (12) qui est logé dans le boîtier de l'appareil de mesure (4), en particulier pour la mise en oeuvre du procédé selon l'une quelconque des revendications 1 à 5, **caractérisé en ce que** l'appareil de mesure (4) présente au moins un capteur (6, 7, 8, 9, 10) pour au moins un paramètre environnemental du résonateur de flexion (12) et/ou de l'appareil de mesure (4) influençant une mesure à effectuer, en particulier une série de mesures, de préférence l'humidité de l'air et/ou la pression atmosphérique et/ou la température de l'air, et une unité de surveillance d'état (2) à laquelle sont transmises les valeurs de mesure du capteur respectif (6, 7, 8, 9, 10), et **en ce que** l'unité de surveillance d'état (2) comprend une unité de mémoire (21) avec des pronostics et des algorithmes de prédiction mémorisés pour la détermination de valeurs des paramètres environnementaux à attendre au cours de la mesure et **en ce que**, sur la base des pronostics et des algorithmes mémorisés ainsi qu'en fonction des valeurs existantes et/ou prédéfinies des paramètres environnementaux et des valeurs de départ des paramètres environnementaux choisies pour la mesure, il est déterminé si la mesure prévue, en particulier la série de mesures, peut être effectuée dans les conditions d'essai choisies et/ou avec les valeurs initiales choisies et/ou avec les valeurs de paramètres choisies ou attendues au cours de la mesure, sans une perturbation ou avec une perturbation admissible en raison des modifications attendues ou pronostiquées des paramètres environnementaux.

7. Appareil de mesure selon la revendication 6, **carac-**

**térisé en ce qu'**à l'appareil de mesure (4) est associé au moins un élément de réglage (11) pour le réglage ou la régulation d'au moins un paramètre environnemental, avec lequel au moins un paramètre environnemental peut être réglé ou ajusté avant et/ou pendant la mesure en fonction de valeurs de correction déterminées ou prédéfinies par l'unité de surveillance d'état (2).

8. Appareil de mesure selon la revendication 6 ou 7, **caractérisé en ce que** l'élément de réglage (11) est réglable ou ajustable par l'unité de surveillance d'état (2).

9. Appareil de mesure selon l'une quelconque des revendications 6 à 8, **caractérisé en ce que** des dispositifs de réglage de la température et/ou de la pression atmosphérique et/ou de l'humidité et/ou de la composition de l'air ou de la teneur en poussières de l'air sont prévus en tant qu'éléments de réglage (11) pour l'appareil de mesure (4) et/ou pour son environnement proche et/ou pour la zone environnante du résonateur de flexion (12).

10. Appareil de mesure selon l'une quelconque des revendications 6 à 9, **caractérisé en ce que** l'unité de surveillance d'état (2) comprend en tant que capteurs (6, 7, 8, 9, 10) des capteurs de température et/ou d'humidité et/ou de pression atmosphérique et/ou de concentration de poussière et/ou de vibrations et/ou de chocs.

11. Support de données sur lequel est stocké un programme d'ordinateur comprenant des instructions qui amènent le dispositif selon l'une quelconque des revendications 6 à 10 à exécuter les étapes du procédé selon l'une quelconque des revendications 1 à 5.

EP 3 124 950 B1

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1464923 A1